(19) **Europäisches Patentamt / European Patent Office / Office européen des brevets**

(11) **EP 4 012 344 A2**

(12) **EUROPEAN PATENT APPLICATION**

(43) Date of publication:
**15.06.2022 Bulletin 2022/24**

(21) Application number: **22169280.9**

(22) Date of filing: **21.04.2022**

(51) International Patent Classification (IPC):
**G01C 21/34** (2006.01)

(52) Cooperative Patent Classification (CPC):
**G01C 21/3492**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111156678**

(71) Applicant: **Beijing Baidu Netcom Science and Technology Co., Ltd. Beijing 100085 (CN)**

(72) Inventors:
• **Li, Man**
  **Beijing (CN)**
• **Yang, Jianzhong**
  **Beijing (CN)**
• **Zhong, Zhiyu**
  **Beijing (CN)**
• **Lu, Zhen**
  **Beijing (CN)**

(74) Representative: **Nederlandsch Octrooibureau P.O. Box 29720 2502 LS The Hague (NL)**

(54) **METHOD AND APPARATUS FOR GENERATING ROUTE INFORMATION, DEVICE, MEDIUM AND PRODUCT**

(57)     The present disclosure provides a method and apparatus for generating route information, a device, a medium and a product, relates to the field of computer technology and specifically to the field of artificial intelligence technology, and can be applied to map navigation scenarios. A specific implementation comprises: acquiring an origin and a destination; determining a candidate route set based on the origin and the destination; generating, for each candidate route in the candidate route set, weight information of the candidate route based on a predicted closure time length of a closed road, in response to determining that the closed road is present in the candidate route; and generating route information based on the weight information of the each candidate route in the candidate route set. According to this implementation, the route information can be comprehensively generated in combination with the predicted closure time length of the road, thus improving the rationality of the time consumption of the generated route.

200

201 Acquiring an origin and a destination

202 Determining a candidate route set based on the origin and the destination

203 Generating, for each candidate route in the candidate route set, weight information of the candidate route based on a predicted closure time length of a closed road, in response to determining that the closed road is present in the candidate route

204 Generating route information based on the weight information of the each candidate route in the candidate route set

Fig. 2

EP 4 012 344 A2

**Description**

TECHNICAL FIELD

The present disclosure relates to the field of computer technology, and specifically to the field of artificial intelligence technology, and can be applied to map navigation scenarios.

BACKGROUND

At present, roads are often temporarily closed due to a temporary traffic control, a traffic accident, a heavy congestion and other factors.

In this regard, when route information is generated, it is often to directly avoid a closed road and select a detour route. However, the detour route often has a problem that the time consumed is long.

SUMMARY

The present disclosure provides a method and apparatus for generating route information, a device, a medium and a product.

In a first aspect, embodiments of the present disclosure provide a method for generating route information, comprising: acquiring an origin and a destination; determining a candidate route set based on the origin and the destination; generating, for each candidate route in the candidate route set, weight information of the candidate route based on a predicted closure time length of a closed road, in response to determining that the closed road is present in the candidate route; and generating route information based on the weight information of the each candidate route in the candidate route set.

In a second aspect, embodiments of the present disclosure provide an apparatus for generating route information, comprising: a position acquiring unit, configured to acquire an origin and a destination; a set determining unit, configured to determine a candidate route set based on the origin and the destination; a weight generating unit, configured to generate, for each candidate route in the candidate route set, weight information of the candidate route based on a predicted closure time length of a closed road, in response to determining that the closed road is present in the candidate route; and a route generating unit, configured to generate route information based on the weight information of the each candidate route in the candidate route set.

In a third aspect, embodiments of the present disclosure provide an electronic device, comprising: one or more processors; and a memory, storing one or more programs, wherein the one or more programs, when executed by the one or more processors, cause the one or more processors to implement the method for generating route information provided by the first aspect.

In a fourth aspect, embodiments of the present disclosure provide a computer-readable medium, storing a computer program thereon, wherein the program, when executed by a processor, causes the processor to implement the method for generating route information provided by the first aspect.

In a fifth aspect, an embodiment of the present disclosure provides a computer program product, comprising a computer program, wherein the computer program, when executed by a processor, implements the method for generating route information provided by the first aspect.

According to the technology of the present disclosure, a method for generating route information is provided. In the method, the route information can be comprehensively generated in combination with the predicted closure time length of the road, thus improving the rationality of the time consumption of the generated route.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

The accompanying drawings are used for a better understanding of the scheme, and do not constitute a limitation to the present disclosure. Here:

Fig. 1 is a diagram of an exemplary system architecture in which an embodiment of the present disclosure may be applied;

Fig. 2 is a flowchart of an embodiment of a method for generating route information according to the present disclosure;

Fig. 3 is a schematic diagram of an application scenario of the method for generating route information according to the present disclosure;

Fig. 4 is a flowchart of another embodiment of the method for generating route information according to the present disclosure;

Fig. 5 is a schematic structural diagram of an embodiment of an apparatus for generating route information according to the present disclosure; and

Fig. 6 is a block diagram of an electronic device used to implement the method for generating route information according to embodiments of the present disclosure.

DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

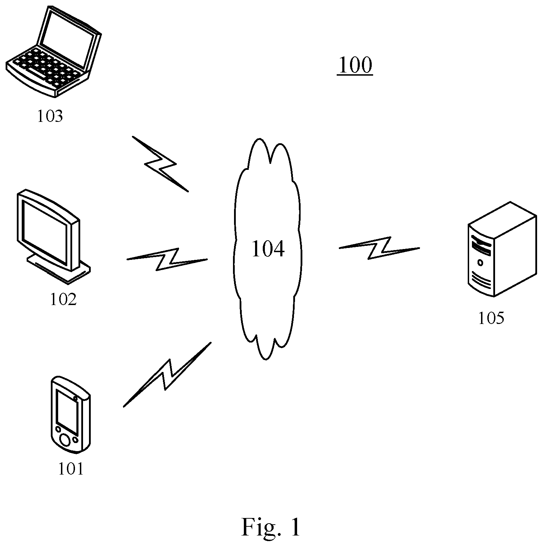

As shown in Fig. 1, a system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may use the terminal devices 101, 102 and 103 to interact with the server 105 via the network 104, to receive or send a message, etc. The terminal devices 101, 102 and 103 may acquire an origin and a destination, and send the origin and the destination to the server 105 through the network 104, to cause the server 105 to return a planned route from the origin to the destination.

The terminal devices 101, 102 and 103 may be hardware or software. When being the hardware, the terminal devices 101, 102 and 103 may be various electronic devices, the electronic devices including, but not limited to, a mobile phone, a vehicle-mounted computer, a vehicle-mounted tablet, a vehicle control device, and the like. When being the software, the terminal devices 101, 102 and 103 may be installed in the above listed electronic devices. The terminal devices 101, 102 and 103 may be implemented as a plurality of pieces of software or a plurality of software modules (e.g., software or software modules for providing a distributed service), or may be implemented as a single piece of software or a single software module, which will not be specifically limited here.

The server 105 may be a server providing various services. For example, the server 105 may acquire the origin and destination sent by the terminal devices 101, 102 and 103, and determine a candidate route set from the origin to the destination. For each candidate route in the candidate route set, in a situation where a closed road is present in the candidate route, the server 105 may generate weight information of the candidate route based on a predicted closure time length of the closed road, and then generate route information based on the weight information of the each candidate route. The server 105 may return the obtained route information to the terminal devices 101, 102 and 103.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically limited here.

It should be noted that a method for generating route information provided in the embodiments of the present disclosure may be performed by the terminal devices 101, 102 and 103 or by the server 105, and an apparatus for generating route information may be provided in the terminal devices 101, 102 and 103 or in the server 105.

It should be appreciated that the numbers of the terminal devices, the networks and the servers in Fig. 1 are merely illustrative. Any number of terminal devices, networks and servers may be provided based on actual requirements.

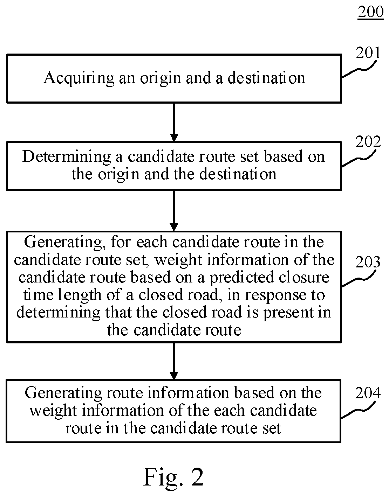

Further referring to Fig. 2, Fig. 2 illustrates a flow 200 of an embodiment of a method for generating route information according to the present disclosure. The method for generating route information in this embodiment includes the following steps:

Step 201, acquiring an origin and a destination.

In this embodiment, an executing body (e.g., the terminal devices 101, 102 and 103 or the server 105 in Fig. 1) may determine, based on a human-machine interaction operation with a user, an origin and destination selected by the user. Alternatively, the executing body may determine an origin automatically based on the geographical position information of a terminal device used by the user, and determine, based on a human-machine interaction operation with the user, a destination selected by the user. Alternatively, the executing body may automatically generate an origin and a destination based on historical navigation data and a current scenario parameter. Here, the origin refers to the start-point position of a navigation, and the destination refers to the end-point position of the navigation.

In some alternative implementations of this embodiment, automatically generating the origin and the destination based on the historical navigation data and the current scenario parameter may include: acquiring current geographical position information of the terminal device used by the user, and acquiring current time information, the current scenario parameter including the current geographical position information and the current time information; searching, from the historical navigation data, target historical navigation data of departing from a position corresponding to the current geographical position information at a time point matching the current time information; and using an end-point position corresponding to the target historical navigation data as the destination. Through this alternative implementation, the origin and the destination can be obtained based on an analysis performed on the historical navigation data, thereby improving the degree of intellectualization of the determination for the origin and the destination.

Step 202, determining a candidate route set based on the origin and the destination.

In this embodiment, the executing body may determine each candidate route with the origin as a start point and the destination as an end point, to obtain the candidate route set. Here, a candidate route in the candidate route set may be constituted by a plurality of roads. If there is a condition such as a temporary traffic control, a traffic accident or a heavy congestion in a certain road constituting the candidate route, the road may be in a closed state due to a manual control, that is, the road at this time is a closed road. Alternatively, if there is a condition such as the heavy congestion or a road damage in the road, even if the road is not under a manual control and not closed, the road can be directly determined as a closed road.

Step 203, generating, for each candidate route in the candidate route set, weight information of the candidate route based on a predicted closure time length of a closed road, in response to determining that the closed road is present in the candidate route.

In this embodiment, for the each candidate route in the candidate route set, the weight information corresponding to the candidate route can be generated. Here, the weight information is used to describe a degree of priority of the candidate route. The weight information of the candidate route indicates that the larger the weight is, the higher the degree of priority is. A candidate route having a high degree of priority is preferentially selected when an optimal route is planned. Here, the degree of priority may be determined by different types of influencing factors. For example, the influencing factors may include, but not limited to, consumed time, a number of traffic lights, a charge amount, and the like. Specifically, the less the consumed time of the candidate route is, the higher the degree of priority of the candidate route is. The fewer the number of the traffic lights in the candidate route is, the higher the degree of priority of the candidate route is. The less the charge amount of the candidate route is, the higher the degree of priority of the candidate route is.

Here, after determining the candidate route set, the executing body may calculate the weight information corresponding to the each candidate route in the candidate route set based on a preset influencing factor. For example, the influencing factor may be preset to the consumed time, or may be set to the consumed time and the number of the traffic lights. The specific way in which the influencing factor is set is not limited in this embodiment. In a scenario where the influencing factor includes the consumed time, the executing body may calculate a time consumption condition of the each candidate route, and then generate weight information for describing a time consumption category, based on the time consumption condition of the each candidate route. If the influencing factor further includes an other category other than the time consumption category, the weight information of the other category of the each candidate route may also be calculated for the other category. The weight information of the other category and the weight information of the time consumption category are aggregated to obtain the weight information of the candidate route.

Further, when generating the weight information for describing the time consumption category, the executing body may generate, for a candidate route containing a closed road, the weight information of the candidate route that is used to describe the time consumption category, in combination with the predicted closure time length of the closed road. Here, the predicted closure time length is used to describe a pre-estimated closure time length of the closed road. Specifically, the executing body may determine a waiting time length taken to wait for the closed road to be reopened based on the predicted closure time length, determine the consumed time of the candidate route based on the waiting time length and a normal travel time length, and obtain the corresponding weight information based on the consumed time.

Step 204, generating route information based on the weight information of the each candidate route in the candidate route set.

In this embodiment, the route information may be used to describe a recommended route recommended to the user in a navigation map. Since the weight information is used to describe the degree of priority of the candidate route, the executing body may use a candidate route with a largest weight as the recommended route to obtain the route information. Alternatively, the executing body may directly output a preset number of candidate routes with weights from high to low, determine and obtain, based on a selection operation of the user on the outputted candidate routes, a candidate route selected by the user, and use the candidate route selected by the user as the recommended route to obtain the route information. Alternatively, the route information may include voice prompt information corresponding to the recommended route, in addition to the recommended route itself.

In some alternative implementations of this embodiment, the generating route information based on the weight information of the each candidate route in the candidate route set may include: determining a recommended route based on the weight information of the each candidate route in the candidate route set; determining, in response to determining that a closed road is present in the recommended route, voice prompt information corresponding to the recommended route based on a predicted closure time length corresponding to the closed road in the recommended route; and generating the route information based on the voice prompt information corresponding to the recommended route and the recommended route. Through this alternative implementation, the corresponding voice prompt information can be generated based on the predicted closure time length corresponding to the closed road, which can make the user more easily understand the recommended route during the navigation, thereby improving the user experience. For example, if the predicted closure time length is relatively short, voice prompt information for indicating no influence on the travel of the user may be generated, for example, "road section A is temporarily closed due to a traffic control, and it is expected that normal traffic will resume after 5 minutes without affecting your travel."

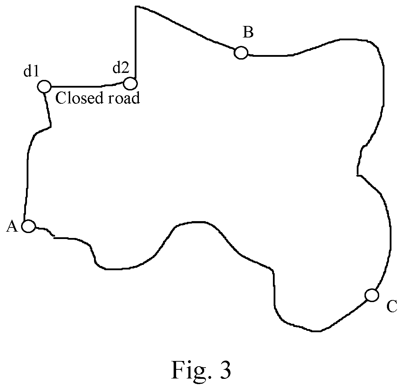

Further referring to Fig. 3, Fig. 3 is a schematic diagram of an application scenario of the method for generating route information according to the present disclosure. In the application scenario of Fig. 3, an executing body may first acquire an origin A and a destination B, and then further determine a candidate route set from the origin A to the destination B. Here, the candidate route set includes two candidate routes. A route 1 starts from the origin A, passes through a point C and then reaches the destination B, and a route 2 starts from the origin A, passes through the closed road between d1 and d2 and then reaches the destination B. For the route 1, since there is no closed road in the candidate route, it is possible to directly determine a travel time length from the origin A to the point C and then to the destination B, use the travel time length as the consumed time of the route 1, and generate the weight information of the route 1 that is used to describe a time consumption category based on the consumed time of the route 1. For the route 2, since there is the closed road constituted by d1 and d2 in the candidate route, the executing body may first determine the predicted closure time length corresponding to the closed road between d1 and d2, then determine the consumed time of the route 2 based on the predicted closure time length, and generate the weight information of the route 2 that is used to describe the time consumption category based on the consumed time of the route 2. Specifically, the consumed time of each candidate route may be calculated based on the following formula:

$$\varphi_k^a = Max\left(\sum_{x \in X} f_t(x, t_a), \delta_t(d, t_a)\right) + \sum_{y \in Y} f_t(y, t_a), \ \forall \, d \, \in D.$$

Here, $\varphi_k^a$ represents the time consumed to pass through a k-th candidate route at a moment $t_a$, X represents the set of road sections before a closed road, in which each road section is x, and Y represents the set of road sections after the closed road, in which each road section is y, D represents a set of closed roads, and d is a closed road in the set of the closed roads. Moreover, $\Sigma_{x \in X} f_t(x, t_a)$ represents the time consumed to pass through the set of the road sections X at the moment $t_a$, $\delta_t(d, t_a)$ represents the predicted closure time length corresponding to the closed road d at the moment $t_a$, and $\Sigma_{y \in Y} f_t(y, t_a)$ represents the time consumed to pass through the set of the road sections Y at the moment $t_a$.

In the application scenario shown in Fig. 3, for the route 2, X is the set of road sections from A to d1, and Y is the set of road sections from d1 to B. When the consumed time is calculated, it is possible to first determine the consumed time required to pass through the set of the road sections from A to d1 and the predicted closure time length of the closed road between d1 and d2, and select a longer time length from the consumed time and the predicted closure time length to obtain a first time length. Then, the time length required to pass through the set of the road sections from d1 to B is determined to obtain a second time length. The first time length and the second time length are added to obtain the consumed time of the route 2.

According to the method for generating route information provided in the above embodiment of the present disclosure, when the route information is generated, in combination with the predicted closure time length of the closed road, a detour route may not be directly selected for a closed road of which the predicted closure time length is short, and thus, the rationality of the time consumption of the generated route can be improved.

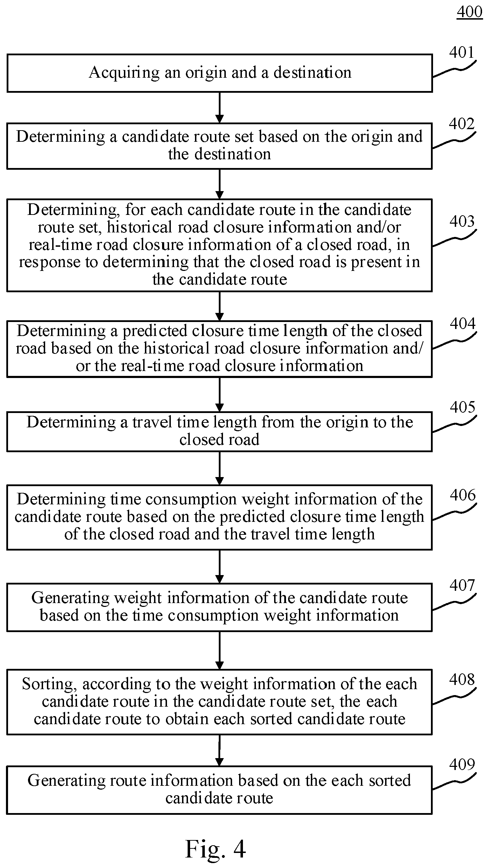

Further referring to Fig. 4, Fig. 4 illustrates a flow 400 of another embodiment of the method for generating route information according to the present disclosure. As shown in Fig. 4, the method for generating route information in this embodiment may include the following steps:

Step 401, acquiring an origin and a destination.

In this embodiment, for the detailed description of step 401, reference is made to the detailed description for step 201, and thus the detailed description will not be repeated here.

Step 402, determining a candidate route set based on the origin and the destination.

In this embodiment, for the detailed description of step 402, reference is made to the detailed description for step 202, and thus the detailed description will not be repeated here.

Step 403, determining, for each candidate route in the candidate route set, historical road closure information and/or real-time road closure information of a closed road, in response to determining that the closed road is present in the candidate route.

In this embodiment, the historical road closure information may be used to describe information of the closed road such as a position, a road attribute, closure start and end time of a historical road closure, a closure time length, a closure cause, a closure type, and a temporal change feature of a road track during a historical closure. The specific content of the historical road closure information is not limited in this embodiment. Here, the road attribute may include, but not limited to, a preset road grade, whether a road is a road around a scenic spot, whether a road is a road in a built-up area, and the like, which is not limited in this embodiment. The real-time road closure information refers to road closure related information published by a channel in real time. The channel here may be preset to a designated official channel, or may be preset to including both an official channel and an unofficial Internet channel. For example, the real-time road closure information may be road closure information and road construction information that are published in real time on the Internet, or may be road control information that is published by the official channel. Alternatively, an executing body may directly obtain a predicted closure time length based on an analysis on the real-time road closure information. Alternatively, the executing body may determine the predicted closure time length based on both the historical road closure information and the real-time road closure information.

In some alternative implementations of this embodiment, the executing body may associate and store each closed road and the historical road closure information corresponding to the each closed road. In the process of calculating the weight of the candidate road, the closed road in the candidate road may be used as an index, to search, in a pre-stored association relationship, the historical road closure information matching the closed road.

Step 404, determining a predicted closure time length of the closed road based on the historical road closure information and/or real-time road closure information of the closed road.

In this embodiment, according to current closure information, the executing body may determine a road closure record having a highest similarity to the current closure information from the historical road closure information, and determine a closure time length in the road closure record having the highest similarity as the predicted closure time length of the closed road. Here, the current closure information may include, but not limited to, road closure start time of a currently closed road, a road attribute of the currently closed road, a closure track change time sequence of a recently closed road, and the like, which is not limited in this embodiment. Alternatively, the executing body may determine the closure time length indicated in the real-time road closure information as the predicted time length of the closed road.

In some alternative implementations of this embodiment, determining the predicted closure time length based on the historical road closure information and the real-time road closure information may include: determining a predicted closure time interval of the closed road based on the real-time road closure information; determining a road closure record having a highest similarity to current road closure information based on the historical road closure information; determining a closure time length corresponding to the road closure record; and correcting the predicted closure time interval based on the closure time length corresponding to the road closure record, to obtain the predicted closure time length of the closed road.

Step 405, determining a travel time length from the origin to the closed road.

In this embodiment, the executing body may determine the travel time length consumed and required to travel normally from the origin to the closed road.

Step 406, determining time consumption weight information of the candidate route based on the predicted closure time length of the closed road and the travel time length.

In this embodiment, the executing body may perform a summation based on the predicted closure time length of the closed road, the travel time length from the origin to the closed road, a time length taken to pass through the closed road, and a travel time length from the closed road to the destination, to obtain the consumed time of the candidate route. Further, the executing body may determine the time consumption weight information of the candidate route based on the consumed time of the candidate route. Here, the time consumption weight information is used to describe a degree of priority of consumed time, and the less the consumed time is, the larger the time consumption weight indicated by the time consumption weight information is.

Here, since a number of closed roads may be at least one, in the situation where the number of the closed roads is two or more, the executing body may determine, for each closed road, the travel time length from the origin to the closed road, determine the predicted closure time length of the closed road, and determine the waiting time length corresponding to the closed road based on the predicted closure time length of the closed road and the travel time length. When the consumed time of the candidate route is calculated, a summation may be performed on the normal travel time length and the waiting time length corresponding to the each closed road to obtain the consumed time of the candidate route. Specifically, in the situation where the predicted closure time length is greater than the travel time length, the difference between the predicted closure time length and the travel time length may be used as the waiting time length of the closed road. For the situation where the predicted closure time length is less than or equal to the travel time length, the waiting time length may be determined to be zero. Moreover, for the determination of the travel time length from the origin to the closed road, in response to determining that a closed road is present in the road section between the origin and the closed road, a summation is performed on the waiting time length of the closed road in the intermediate road section and the time length taken to travel normally to the closed road, to obtain the travel time length from the origin to the closed road.

In some alternative implementations of this embodiment, the determining time consumption weight information of the candidate route based on the predicted closure time length of the closed road and the travel time length includes: determining, in response to determining that the travel time length is greater than the predicted closure time length, the time consumption weight information of the candidate route based on the travel time length.

In this implementation, if the travel time length is greater than the predicted closure time length, it indicates that the closed road can be reopened before the user reaches the closed road. At this time, the executing body may perform a summation on the travel time length from the origin to the closed road, the time length taken to pass through the closed road and the travel time length from the closed road to the destination, to obtain the consumed time of the candidate route. Then, the executing body determines the time consumption weight information of the candidate route based on the consumed time of the candidate route.

In some other alternative implementations of this embodiment, the determining time consumption weight information of the candidate route based on the predicted closure time length of the closed road and the travel time length includes: determining, in response to determining that the travel time length is less than or equal to the predicted closure time length, the time consumption weight information of the candidate route based on the predicted closure time length.

In this embodiment, if the travel time length is less than or equal to the predicted closure time length, it indicates that the closed road is just reopened or the closed road is not reopened yet at the time of travelling to the closed road. At this time, a summation may be performed based on the predicted closure time length of the closed road, the time length taken to pass through the closed road and the travel time length taken to travel from the closed road to the destination, to obtain the consumed time of the candidate route. Then, the executing body determines the time consumption weight information of the candidate route based on the consumed time of the candidate route.

Step 407, generating weight information of the candidate route based on the time consumption weight information.

In this embodiment, the weight information of the candidate route may be jointly determined based on a plurality of influencing factors such as consumed time, a charge amount and a number of passing traffic lights. Here, for each influencing factor, the corresponding weight information can be determined. Then, by combining these influencing factors, the weight information of the candidate route can be obtained.

Step 408, sorting, according to the weight information of the each candidate route in the candidate route set, the each candidate route to obtain each sorted candidate route.

In this embodiment, the executing body may sort the each candidate route in a descending order of weights indicated by weight information of the candidate routes in the candidate route set, to obtain the each sorted candidate route. Alternatively, the executing body may further output the each sorted candidate route, for the user to select a final travel route.

Step 409, generating route information based on the each sorted candidate route.

In this embodiment, the executing body may detect a selection instruction of the user for the each sorted candidate route that is outputted, determine a route triggered and selected by the selection instruction, and generate corresponding route information based on the route.

Here, for the detailed description of the generation of the route information, reference is made to the detailed description for step 204, and thus the detailed description will not be repeated here.

According to the method for generating route information provided in the above embodiment of the present disclosure, it is also possible to determine the predicted closure time length of the closed road according to the at least one of historical road closure information or real-time road closure information of the closed road, thereby improving the reliability of the determination for the predicted closure time length. Moreover, the executing body may further determine the time consumption weight information based on the travel time length from the origin to the closed road and the predicted closure time length of the closed road, and then determine the weight information of the candidate route based on the time consumption weight information, thereby improving the precision of the determination for the weight information. Moreover, the route information is generated based on the sorted candidate route, which enables the generated route information to be the optimal route obtained by combining weights of various influencing factors, thereby improving the route generation effect.

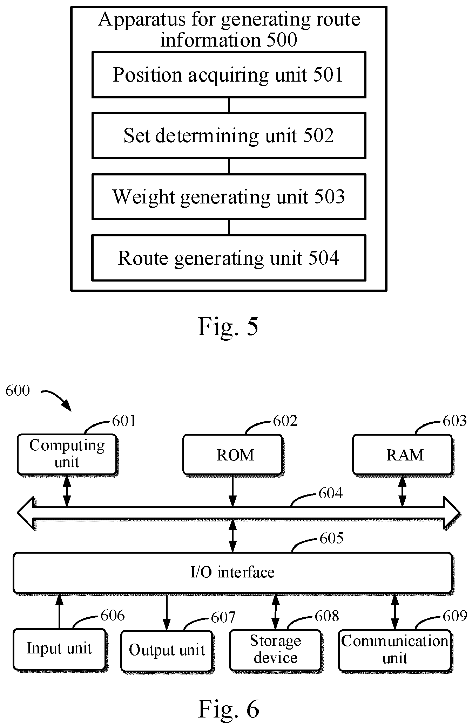

Further referring to Fig. 5, as an implementation of the method shown in the above drawing, the present disclosure provides an embodiment of an apparatus for generating route information. The embodiment of the apparatus corresponds to the embodiment of the method shown in Fig. 2. The apparatus may be applied in electronic devices such as a terminal device and a server.

As shown in Fig. 5, an apparatus 500 for generating route information in this embodiment includes: a position acquiring unit 501, a set determining unit 502, a weight generating unit 503 and a route generating unit 504.

The position acquiring unit 501 is configured to acquire an origin and a destination.

The set determining unit 502 is configured to determine a candidate route set based on the origin and the destination.

The weight generating unit 503 is configured to generate, for each candidate route in the candidate route set, weight information of the candidate route based on a predicted closure time length of a closed road, in response to determining that the closed road is present in the candidate route.

The route generating unit 504 is configured to generate route information based on the weight information of the each candidate route in the candidate route set.

In some alternative implementations of this embodiment, the apparatus further includes: a closure time length predicting unit, configured to determine at least one of historical road closure information or real-time road closure information of the closed road; and determine the predicted closure time length of the closed road based on the at least one of historical road closure information or the real-time road closure information.

In some alternative implementations of this embodiment, the weight generating unit 503 is further configured to: determine a travel time length from the origin to the closed road; determine time consumption weight information of the candidate route based on the predicted closure time length of the closed road and the travel time length; and generate the weight information of the candidate route based on the time consumption weight information.

In some alternative implementations of this embodiment, the weight generating unit 503 is further configured to: determine, in response to determining that the travel time length is greater than the predicted closure time length, the time consumption weight information of the candidate route based on the travel time length.

In some alternative implementations of this embodiment, the weight generating unit 503 is further configured to: determine, in response to determining that the travel time length is less than or equal to the predicted closure time length, the time consumption weight information of the candidate route based on the predicted closure time length.

In some alternative implementations of this embodiment, the route generating unit 504 is further configured to: sort, according to the weight information of the each candidate route in the candidate route set, the each candidate route to obtain each sorted candidate route; and generate the route information based on the each sorted candidate route.

It should be understood that, the units 501-504 described in the apparatus 500 for generating route information respectively correspond to the steps in the method described with reference to Fig. 2. Accordingly, the above operations and features described for the method for generating route information are also applicable to the apparatus 500 and the units included therein, and thus will not be repeatedly described here.

In the technical solution of the present disclosure, the collection, storage, use, processing, transmission, provision, disclosure, etc. of the information such as a geographical position all comply with the provisions of the relevant laws and regulations, and do not violate public order and good customs.

According to an embodiment of the present disclosure, the present disclosure further provides an electronic device, a readable storage medium and a computer program product.

Fig. 6 is a schematic block diagram of an example electronic device 600 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described or claimed herein.

As shown in Fig. 6, the device 600 includes a computation unit 601, which may execute various appropriate actions and processes in accordance with a computer program stored in a read-only memory (ROM) 602 or a computer program loaded into a random access memory (RAM) 603 from a storage unit 608. The RAM 603 also stores various programs and data required by operations of the device 600. The computation unit 601, the ROM 602 and the RAM 603 are connected to each other through a bus 604. An input/output (I/O) interface 605 is also connected to the bus 604.

The following components in the device 600 are connected to the I/O interface 605: an input unit 606, for example, a keyboard and a mouse; an output unit 607, for example, various types of displays and a speaker; a storage device 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computation unit 601 may be various general-purpose and/or special-purpose processing assemblies having processing and computing capabilities. Some examples of the computation unit 601 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 601 performs the various methods and processes described above, for example, the method for generating route information. For example, in some embodiments, the method for generating route information may be implemented as a computer software program, which is tangibly included in a machine readable medium, for example, the storage device 608. In some embodiments, part or all of the computer program may be loaded into and/or installed on the device 600 via the ROM 602 and/or the communication unit 609. When the computer program is loaded into the RAM 603 and executed by the computation unit 601, one or more steps of the above method for generating route information may be performed. Alternatively, in other embodiments, the computation unit 601 may be configured to perform the method for generating route information through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for generating route information, comprising:

   acquiring (201, 401) an origin and a destination;
   determining (202, 402) a candidate route set based on the origin and the destination;
   generating (203), for each candidate route in the candidate route set, weight information of the candidate route based on a predicted closure time length of a closed road, in response to determining that the closed road is present in the candidate route; and
   generating (204) route information based on the weight information of the each candidate route in the candidate route set.

2. The method according to claim 1, further comprising:

   determining (403) at least one of historical road closure information or real-time road closure information of the closed road; and
   determining (404) the predicted closure time length of the closed road based on the at least one of historical road closure information or real-time road closure information.

3. The method according to any one of claims 1-2, wherein generating (203) the weight information of the candidate route based on the predicted closure time length of the closed road comprises:

   determining (405) a travel time length from the origin to the closed road;
   determining (406) time consumption weight information of the candidate route based on the predicted closure time length of the closed road and the travel time length; and
   generating (407) the weight information of the candidate route based on the time consumption weight information.

4. The method according to claim 3, wherein the determining (406) time consumption weight information of the candidate route based on the predicted closure time length of the closed road and the travel time length comprises:
   determining, in response to determining that the travel time length is greater than the predicted closure time length, the time consumption weight information of the candidate route based on the travel time length.

5. The method according to claim 3, wherein the determining (406) time consumption weight information of the candidate route based on the predicted closure time length of the closed road and the travel time length comprises:
   determining, in response to determining that the travel time length is less than or equal to the predicted closure time length, the time consumption weight information of the candidate route based on the predicted closure time length.

6. The method according to any one of claims 1-5, wherein the generating (204) route information based on the weight information of the each candidate route in the candidate route set comprises:

   Sorting (408), according to the weight information of the each candidate route in the candidate route set, the each candidate route to obtain each sorted candidate route; and
   generating (409) the route information based on the each sorted candidate route.

7. An apparatus for generating route information, comprising:

a position acquiring unit (501), configured to acquire an origin and a destination;
a set determining unit (502), configured to determine a candidate route set based on the origin and the destination;
a weight generating unit (503), configured to generate, for each candidate route in the candidate route set, weight information of the candidate route based on a predicted closure time length of a closed road, in response to determining that the closed road is present in the candidate route; and
a route generating unit (504), configured to generate route information based on the weight information of the each candidate route in the candidate route set.

8. The apparatus according to claim 7, further comprising:
a closure time length predicting unit, configured to determine at least one of historical road closure information or real-time road closure information of the closed road; and determine the predicted closure time length of the closed road based on the at least one of historical road closure information or real-time road closure information.

9. The apparatus according to any one of claims 7-8, wherein the weight generating unit (503) is further configured to:

determine a travel time length from the origin to the closed road;
determine time consumption weight information of the candidate route based on the predicted closure time length of the closed road and the travel time length; and
generate the weight information of the candidate route based on the time consumption weight information.

10. The apparatus according to claim 9, wherein the weight generating unit (503) is further configured to:
determine, in response to determining that the travel time length is greater than the predicted closure time length, the time consumption weight information of the candidate route based on the travel time length.

11. The apparatus according to claim 9, wherein the weight generating unit (503) is further configured to:
determine, in response to determining that the travel time length is less than or equal to the predicted closure time length, the time consumption weight information of the candidate route based on the predicted closure time length.

12. The apparatus according to any one of claims 7-11, wherein the route generating unit (504) is further configured to:

sort, according to the weight information of the each candidate route in the candidate route set, the each candidate route to obtain each sorted candidate route; and
generate the route information based on the each sorted candidate route.

13. An electronic device, comprising:

at least one processor; and
a storage device, communicated with the at least one processor,
wherein the storage device stores an instruction executable by the at least one processor, and the instruction is executed by the at least one processor, to enable the at least one processor to perform the method according to any one of claims 1-6.

14. A non-transitory computer readable storage medium, storing a computer instruction, wherein the computer instruction is used to cause a computer to perform the method according to any one of claims 1-6.

15. A computer program product, comprising a computer program, wherein the computer program, when executed by a processor, implements the method according to any one of claims 1-6.

100

103

104

102

105

101

Fig. 1

<u>200</u>

201

Acquiring an origin and a destination

202

Determining a candidate route set based on
the origin and the destination

Generating, for each candidate route in the
candidate route set, weight information of the
candidate route based on a predicted closure
time length of a closed road, in response to
determining that the closed road is present in
the candidate route

203

Generating route information based on the
weight information of the each candidate
route in the candidate route set

204

Fig. 2

Fig. 3

400

Acquiring an origin and a destination 401

Determining a candidate route set based on the origin and the destination 402

Determining, for each candidate route in the candidate route set, historical road closure information and/or real-time road closure information of a closed road, in response to determining that the closed road is present in the candidate route 403

Determining a predicted closure time length of the closed road based on the historical road closure information and/ or the real-time road closure information 404

Determining a travel time length from the origin to the closed road 405

Determining time consumption weight information of the candidate route based on the predicted closure time length of the closed road and the travel time length 406

Generating weight information of the candidate route based on the time consumption weight information 407

Sorting, according to the weight information of the each candidate route in the candidate route set, the each candidate route to obtain each sorted candidate route 408

Generating route information based on the each sorted candidate route 409

Fig. 4

Apparatus for generating route
information 500

Position acquiring unit 501

Set determining unit 502

Weight generating unit 503

Route generating unit 504

Fig. 5

600

601
Computing
unit

602
ROM

603
RAM

604

605
I/O interface

606
Input unit

607
Output unit

608
Storage
device

609
Communication
unit

Fig. 6